# EUROPÄISCHE PATENTSCHRIFT

(11) **EP 3 825 262 B1**
(45) Veröffentlichungstag und Bekanntmachung des Hinweises auf die Patenterteilung: **10.01.2024**
(21) Anmeldenummer: 20205757.6
(22) Anmeldetag: 04.11.2020
(51) Int. Cl.: B65G 47/252, B21B 39/32

(54) **WENDESTATION FÜR BLECHTAFELN ODER BLECHTAFELSTAPEL UND VERFAHREN ZUR VERWENDUNG DER WENDESTATION**
TURNING STATION FOR SHEET PLATES OR STACK OF SHEET PLATES AND METHOD OF USING THE TURNING STATION
STATION DE RETOURNEMENT POUR PANNEAUX EN TÔLE OU PILES DE PANNEAUX EN TÔLE ET PROCÉDÉ D'UTILISATION DE LA STATION DE RETOURNEMENT

(30) Priorität: 22.11.2019 DE 102019008122
(43) Veröffentlichungstag der Anmeldung: 26.05.2021
(73) Patentinhaber: KEURO Besitz GmbH & Co. EDV-Dienstleistungs KG, 77855 Achern (DE)
(72) Erfinder: Stolzer, Armin, 76530 Baden-Baden (DE); Krebber, Sönke Florian, 76530 Baden-Baden (DE)
(74) Vertreter: LBP Lemcke, Brommer & Partner Patentanwälte mbB

(56) Entgegenhaltungen:
- DE-B3-102012 216 484
- DE-U1- 20 215 478
- FR-A1- 2 588 251
- JP-A- 2001 171 828
- KR-B1- 100 776 287
- US-A- 4 178 119

## Beschreibung

Die Erfindung betrifft eine Wendestation für Blechtafeln oder Blechtafelstapel nach dem Oberbegriff des Anspruchs 1 sowie ein Verfahren zum Auspacken von Blechtafelstapeln, ein Verfahren zum Einlagern von Blechtafelstapeln und ein Verfahren zum Wenden von Blechtafeln oder Blechtafelstapeln, jeweils unter Verwendung einer solchen Wendestation.

Eine Wendestation der vorliegenden Art umfasst demnach eine erste Auflage, die eine erste Auflageebene für eine erste Seite der Blechtafeln bildet, sowie eine zweite Auflage, die eine zweite Auflageebene für eine zweite Seite der Blechtafeln bildet. Die beiden Auflagen sind jeweils um eine horizontale Achse drehbar und mit mehreren, über die Auflageebenen der Auflagen überstehenden Anschlägen für Längskanten der Blechtafeln versehen. Die angesprochenen beiden Seiten der mittels der Wendestation zu handhabenden Blechtafeln oder Blechtafelstapel entsprechen einer Oberseite und einer Unterseite einer Blechtafel, welche außerdem vier Längskanten aufweisen, die sich in der Regel auf zwei Breitseitenkanten und zwei Stirnseitenkanten verteilen, wenn die Blechtafeln einen rechteckigen Zuschnitt haben.

Wendestationen der vorliegenden Art kommen insbesondere beim Einlagern von Blechtafeln oder Blechtafelpaketen in ein Blechlagersystem zum Einsatz, wobei Blechtafeln mit typischen Abmessungen von 2.000 mm x 1.000 mm bis zu 4.000 mm x 2.000 mm und typischen Gewichten von 2.000 bis 4.000 kg gehandhabt werden müssen. Hierzu werden in der Regel Blechtafelstapel in einer Schutzverpackung angeliefert, sodass die Blechtafelstapel zunächst von der Schutzverpackung befreit werden müssen. Eine solche Schutzverpackung besteht üblicherweise aus einer unteren Holzpalette, auf der der Blechtafelstapel aufliegt, und einer oberen Holzpalette, wobei zum Schutz der Oberflächen und der Kanten der Blechtafeln üblicherweise noch Zwischenlagen zwischen den Holzpaletten und dem Blechtafelstapel sowie rund um die Längskanten der Blechtafeln umlaufende Kantenschutzelemente vorhanden sind. Das ganze Paket ist schließlich mit mehreren Stahlbändern verschnürt.

Eine Wendestation der vorliegenden Art, die beim Einlagern eines Blechtafelstapels in ein Blechlager, beispielsweise ein Blechlager eines Stahlhandels, zum Einsatz kommt, um einen angelieferten Blechtafelstapel von seiner Schutzverpackung zu befreien und den Blechtafelstapel anschließend automatisiert in das Blechlager einzulagern ist als Videoclip unter der Webadresse URL: https://www.youtube.com/watch?v=w3nd4lqgllA (abgerufen am 28. Oktober 2019) bekannt geworden. Dort wird ein Blechtafelstapel mitsamt seiner Schutzverpackung auf eine erste Auflage aufgelegt, die aus mehreren Stegen gebildet wird, zwischen die die Gabeln eines Gabelstaplers eingefahren werden können. Nach dem Auflegen des Blechtafelstapels mittels eines Gabelstaplers wird die Schutzverpackung geöffnet und insbesondere die oberseitige Holzpalette entfernt, bis letztendlich die Oberseite (zweite Seite) der obersten Blechtafel freiliegt. Sodann wird die erste Auflage um eine horizontale Achse um nahezu 90 Winkelgrade verschwenkt, worauf eine zweite Auflage mit zur ersten Auflageebene parallel verlaufender zweiten Auflageebene an die freiliegende zweite Seite des Blechtafelstapels herangefahren und an diese angelegt wird. Nun werden beide Auflagen gemeinsam um die horizontale Achse verschwenkt, so dass die erste Auflage gegenüber der Ausgangsposition um mehr als 90° gedreht wurde. Hierdurch liegt der Blechtafelstapel nun auf der zweiten Auflage auf, sodass die erste Auflage entfernt werden kann. Die zweite Auflage wird danach weiter um die horizontale Achse verschwenkt, bis die zweite Auflageebene horizontal verläuft. Der Blechtafelstapel wurde hierdurch im Ergebnis um 180 Winkelgrade gedreht, d.h. gewendet. In dieser Situation wird der Blechtafelstapel nun von der restlichen Schutzverpackung befreit. Anschließend wird die Wendestation dazu verwendet, um den Blechtafelstapel auf eine Palette aufzulegen, wobei der Blechtafelstapel nochmals gewendet wird. Auf dieser Palette erfolgt dann die Einlagerung in das Blechlager.

Die Übergabe des Blechtafelstapels von der ersten zur zweiten Auflage erfordert nach diesem Stand der Technik eine aufwändige Bewegungssteuerung der ersten und der zweiten Auflage, denn die Höhe des Blechtafelstapels kann variieren. Die beiden Auflagen müssen daher sowohl rotatorisch als auch translatorisch bewegt werden, um den Blechtafelstapel von der ersten Auflage auf die zweite Auflage übergeben zu können. Darüber hinaus müssen die beiden Auflagen aufgrund der vergleichsweise hohen Gewichte der zu handhabenden Blechtafelstapel nicht nur massiv ausgebildet sein, sondern auch mit entsprechend starken Antrieben und Kraftübertragungseinrichtungen versehen sein.

Bei anderen bekannten Lösungen zum Einlagern von Blechtafelstapeln ist die Zugänglichkeit des Blechtafelstapels, um eine Schutzverpackung zu entfernen, in der Regel stark eingeschränkt

Schließlich sollte eine Wendestation der vorliegenden Art nicht nur zum Auspacken und Einlagern von Blechtafelstapeln geeignet sein, sondern auch zum Wenden von einzelnen Blechtafeln oder auch von Blechtafelstapeln zum Zweck einer Inspektion bei Qualitätssicherungsmaßnahmen oder zum Zweck einer Kommission, beispielsweise von Riffel- oder Tränenblechen.

In der FR-A-2 588 251, die die Merkmale des Oberbegriffs des Anspruchs 1 offenbart, ist eine Wendeeinrichtung offenbart, mit der palettierte Güter von einer ersten Palette auf eine zweite Palette umgesetzt werden können, indem die zweite Palette oben auf die palettierten Güter aufgelegt und der gesamte Stapel in der Wendeeinrichtung auf den Kopf gestellt wird, sodass die Güter auf der zweiten Palette aufliegend entnommen werden können. Hierzu wird ein drehbarer Korb verwendet, der zwei symmetrisch gegeneinander verfahrbare Auflagen aufweist. Zwischen diesen Auflagen wird der Stapel mit den beiden Paletten gehalten, um ihn um 180° drehen zu können.
in der DE-B-10 2012 216 484 wird eine Wendeeinrichtung mit zwei Wendetischen vorgeschlagen, die in einer Art drehbarem Korb aufgehängt und synchron zueinander hin und voneinander weg verfahrbar sind, sodass ein zu wendendes Material zwischen den beiden Wendetischen sich immer in der Drehachse des Korbs befindet. Die Wendetische sind mit Rippen zur Ausbildung von Auflageebenen versehen. Der Korb ist in einem Gestell gelagert und kann um 360° gedreht werden. Führungssäulen dienen als Linearführungen für die Wendetische.

Der Erfindung liegt die Aufgabe zugrunde, eine Wendestation für Blechtafeln oder Blechtafelstapel der eingangs genannten Art vorzuschlagen, die insbesondere mit einer einfacheren Kinematik arbeitet. Ferner sollen Verfahren unter Verwendung dieser Wendestation zum Auspacken, Einlagern und/oder Wenden von Blechtafeln oder Blechtafelstapeln vorgeschlagen werden.

Gelöst ist diese Aufgabe durch eine Wendestation mit den Merkmalen des Anspruchs 1 sowie durch ein Verfahren zum Auspacken von Blechtafelstapeln mit den Merkmalen des Anspruchs 7, durch ein Verfahren zum Einlagern von Blechtafelstapeln mit den Merkmalen des Anspruchs 8 sowie durch ein Verfahren zum Wenden von Blechtafeln oder Blechtafelstapeln mit den Merkmalen des Anspruchs 9. Vorteilhafte Ausgestaltungen der erfindungsgemäßen Wendestation finden sich in den Ansprüchen 2 bis 6; bevorzugte Weiterbildungen der erfindungsgemäßen Verfahren sind in den Ansprüchen 10 bis 14 niedergelegt.

Eine erfindungsgemäße Wendestation für Blechtafeln oder Blechtafelstapel, mit einer ersten Auflage, die eine erste Auflageebene für eine erste Seite der Blechtafeln bildet, und mit einer zweiten Auflage, die eine zweite Auflageebene für eine zweite Seite der Blechtafeln bildet, und bei der die beiden Auflagen jeweils um eine horizontale Achse drehbar sind sowie mit mehreren, über die Auflageebenen der Auflagen überstehenden Anschlägen für Längskanten der Blechtafeln versehen sind, zeichnet sich demnach dadurch aus, dass die beiden Auflagen Teil einer Dreheinrichtung sind, die außerdem ein Gestell mit zwei stirnseitigen, in einer gemeinsamen Drehachse liegenden Drehlagern sowie einen in den beiden Drehlagern gelagerten, motorisch um die Drehachse drehbaren Korb mit stirnseitigen Linearführungen für die beiden Auflagen umfasst. Die beiden Auflagen sind hierbei solcherart mit parallel verlaufenden, zueinander hin orientierten Auflageebenen im Korb gehalten, dass sich die Drehachse zwischen den beiden Auflageebenen befindet und die beiden Auflagen in den stirnseitigen Linearführungen jeweils in einer Bewegungsrichtung zur Drehachse hin und von dieser weg motorisch bewegbar sind.

Die Dreheinrichtung der erfindungsgemäßen Wendestation ist somit das Kernstück zum Wenden von Blechtafeln oder Blechtafelstapeln. Zum Auspacken von Blechtafelstapeln wird erfindungsgemäß zunächst sichergestellt, dass sich die Dreheinrichtung in einer Nullstellung befindet, in der die beiden Auflagen voneinander beabstandet sind und die Auflageebenen horizontal verlaufen. In dieser Nullstellung wird der Blechtafelstapel in die Dreheinrichtung eingebracht, beispielsweise mittels eines Gabelstaplers, und auf der momentan unten angeordneten Auflage (erste Auflage) abgelegt. Wenn die Auflagen, wie dies erfindungsgemäß bevorzugt ist, jeweils durch mehrere, quer zur Drehachse verlaufende Stege gebildet sind, wird das Ablegen des Blechtafelstapels mit einem Gabelstapler vereinfacht, da dessen Gabeln zwischen den einzelnen Stegen der Auflage hindurchgeführt werden können.

Nachdem der Blechtafelstapel in die Dreheinrichtung eingebracht wurde und mit geöffneter Verpackung auf der ersten Auflage aufliegt - wobei die Verpackung vor dem Einbringen der Dreheinrichtung oder vorzugsweise erst nach dem Einbringen in die Dreheinrichtung geöffnet worden ist - werden die beiden Auflagen zusammengefahren, bis der Blechtafelstapel zwischen den beiden Auflagen eingespannt ist. Da die beiden Auflagen, wie dies im Rahmen der vorliegenden Erfindung bevorzugt ist, spiegelsymmetrisch zur Ebene der Drehachse bewegbar sind und vorzugsweise auch so bewegt werden, verläuft die Drehachse in diesem Verfahrensstadium etwa mittig durch den Blechtafelstapel. Eine Drehung des drehbaren Korbs der Dreheinrichtung um 180 Winkelgrade, die erfindungsgemäß vorgenommen wird, kann daher im Vergleich zum Stand der Technik mit wesentlich geringeren Kräften durchgeführt werden; denn die Drehachse befindet sich in der erfindungsgemäßen Dreheinrichtung sehr viel näher am Schwerpunkt des Blechtafelstapels als im Stand der Technik. Darüber hinaus entfällt die problematische Übergabe des Blechtafelstapels von der ersten auf die zweite Auflage, denn der Blechtafelstapel ist während der Drehung, d.h. während des Wendens zwischen den beiden Auflagen eingespannt.

Nach der Drehung des drehbaren Korbs der Dreheinrichtung um 180 Winkelgrade werden die beiden Auflagen wieder auseinandergefahren, sodass der Blechtafelstapel nun auf der zweiten Auflage aufliegt, die nun unten angeordnet ist, und vom Rest der Verpackung befreit werden kann, was vorzugsweise vor dem Entnehmen des Blechtafelstapels aus der Dreheinrichtung erfolgt, jedoch im Rahmen der vorliegenden Erfindung auch nach dem Entnehmen stattfinden kann. Alternativ wird der Rest der Verpackung des Blechtafelstapels entfernt, danach die beiden Auflagen wieder zusammengefahren und der drehbare Korb der Dreheinrichtung wieder um 180 Winkelgrade zurückgedreht, bevor der Blechtafelstapel aus der Dreheinrichtung entnommen wird. Dieser kann dann in derselben Orientierung in ein Lager eingelagert werden, in der er ursprünglich angeliefert worden ist.

Die beiden Auflagen der erfindungsgemäßen Wendestation sind bevorzugt im Wesentlichen identisch aufgebaut, so dass sich die Dreheinrichtung nach dem Entnehmen einer Blechtafel oder eines Blechtafelstapels bereits wieder in der Nullstellung befindet, ohne eine Drehung um 180 Winkelgrade zurück durchführen zu müssen. Dies spart nicht nur Zeit, sondern verhindert insoweit auch eine Fehlbedienung.

Die erfindungsgemäße Wendestation weist somit eine einfacher zu beherrschende Kinematik auf, als dies im Stand der Technik üblich war. Der um die Drehachse drehbare Korb sitzt stirnseitig in den Drehlagern des Gestells der Dreheinrichtung und ist vorzugsweise zur Drehachse symmetrisch ausgebildet; er wird rein rotatorisch und mit weitgehend ausbalancierten Gewichtskräften um eine horizontale Drehachse gedreht. Dies ist motorisch leicht zu lösen. Der drehbare Korb ist stirnseitig mit je einer Linearführung versehen, in der die beiden Auflagen sitzen, und zwar in einer Orientierung zueinander hin, wobei die beiden Auflageebenen parallel verlaufen und (zumindest in der Nullstellung) unterhalb und oberhalb der horizontale Drehachse liegen. Vorzugsweise verlaufen die Auflageebenen auch zur Drehachse parallel. Mittels der stirnseitig im drehbaren Korb angebrachten Linearführungen können die beiden Auflagen zur Drehachse hin und von dieser weg linear motorisch bewegt werden, wobei die beiden Auflageebenen auch während dieser Bewegung jeweils parallel zueinander verlaufen. Auch solche linearen Bewegungen sind leicht kinematisch umzusetzen und mit vorzugsweise elektromotorischen Antrieben zu realisieren. Vorzugsweise sind die Linearführungen mit Zahnstangen versehen oder wirkverbunden, um die Auflagen entlang der Linearführungen bewegen zu können.

Kinematisch besonders einfach ist eine Bewegbarkeit der beiden Auflagen spiegelsymmetrisch zur Ebene der Drehachse; im Rahmen der vorliegenden Erfindung können die Auflagen jedoch auch separat bewegbar ausgebildet sein.

Nach einer bevorzugten Weiterbildung der erfindungsgemäßen Wendestation ist zumindest ein Teil der Anschläge für Längskanten der Blechtafeln, die an den Auflagen angeordnet sind und über die Auflageebenen überstehen, mit Laufrollen für die Längskanten versehen. Dies ermöglicht, einen Blechtafelstapel in der Dreheinrichtung auszurichten, indem die Dreheinrichtung nach dem Einbringen und Ablegen des Blechtafelstapels sowie nach dem Zusammenfahren der beiden Auflagen und Einspannen des Blechtafelstapels lediglich um 90 Winkelgrade gedreht wird und dann die beiden Auflagen geringfügig auseinandergefahren werden, sodass zum einen alle Blechtafeln an den Anschlägen ausgerichtet werden können und zum anderen auch stirnseitig zusammengeschoben werden können, um die Blechtafeln des Blechtafelstapels nicht nur untereinander auszurichten, sondern gegebenenfalls auch in eine definierte Ausgangsposition für eine Weiterverarbeitung zu schieben. Hierfür ist die erfindungsgemäße Wendestation bevorzugt mit mindestens einer Schiebeeinheit zum Aufsetzen auf Längskanten der Blechtafeln und zum Schieben von Blechtafeln innerhalb einer zu den Auflageebenen parallelen Schiebenebene versehen. Bevorzugt ist mindestens eine Schiebeeinheit dafür verantwortlich, die Blechtafeln mit ihren breitseitigen Längskanten gegen die Anschläge zu schieben und die Blechtafeln somit an den Anschlägen auszurichten, während zwei Schiebeeinheiten, die jeweils an einer stirnseitigen Längskante der Blechtafeln ansetzen, dafür verantwortlich sind, die Blechtafeln mit Hilfe der Laufrollen an den Anschlägen zusammenzuschieben und so auch stirnseitig auszurichten.

Insbesondere in diesem Zusammenhang ist es bevorzugt, wenn das Einbringen des Blechtafelstapels in die Dreheinrichtung und das Ablegen desselben auf der momentan unten angeordneten Auflage solcherart erfolgt, dass der Blechtafelstapel an zumindest einer Längskante der Blechtafeln an den über die Auflageebene der Auflage überstehenden Anschlägen anliegt. Wenn der Blechtafelstapel mit einem Gabelstapler in die Dreheinrichtung eingelegt wird, kann dies ganz einfach dadurch erfolgen, dass die Gabeln des Gabelstaplers nicht vollständig unter die Auflage abgesenkt werden, sondern den Blechtafelstapel beim Herausziehen der Gabeln aus der Dreheinrichtung gegen die Anschläge ziehen; diese halten den Blechtafelstapel dann zurück. Die Gabeln des Gabelstaplers können beim Einlegen auch nur soweit abgesenkt werden, bis der Blechtafelstapel zwar noch nicht auf der Auflage aufliegt, jedoch beim Zurückziehen der Gabeln an den Anschlägen anliegt. Dann können die Gabeln des Gabelstaplers unter die Auflage abgesenkt und vollständig aus der Dreheinrichtung herausgefahren werden. Somit liegt der Blechtafelstapel bereits an den Anschlägen an, wenn er in der Nullstellung der Dreheinrichtung auf der ersten Auflage aufliegt. Zweckmäßigerweise wird die Dreheinrichtung dann jeweils so gedreht, dass die an den Anschlägen anliegende Längskante der Blechtafeln nach unten orientiert ist.

Ein weiteres Merkmal der erfindungsgemäßen Wendestation besteht darin, dass sie zusätzlich zur Dreheinrichtung eine stationäre Übergabeeinrichtung mit mehreren horizontal orientierten und beidseits gemeinsam horizontal ausfahrbaren Stangen, insbesondere Teleskopstangen zum Ablegen der Blechtafeln oder des Blechtafelstapels aufweist. Auf einer ersten Breitseite der Übergabeeinrichtung sind die Stangen bzw. Teleskopstangen ausfahrbar, um eine Auflage in der Dreheinrichtung zu unterfassen, und auf einer zweiten Breitseite der Übergabeeinrichtung sind die Stangen bzw. Teleskopstangen ausfahrbar, um Blechtafeln oder den Blechtafelstapel an eine Transporteinrichtung zu übergeben.

Bevorzugt ist es, wenn die Wendestation zusätzlich zur Dreheinrichtung und der Übergabeeinrichtung auch eine Transporteinrichtung aufweist, wobei die Übergabeeinrichtung zwischen der Dreheinrichtung und der Transporteinrichtung angeordnet ist, und wobei die Transporteinrichtung mindestens eine Palette zum Ablegen und Einlagern von Blechtafeln oder Blechtafelstapeln umfasst.

Besonders bevorzugt ist es hierbei, wenn das Gestell der Einrichtung mit Laufrädern, insbesondere mit Laufrädern für Schienen versehen ist, um die Dreheinrichtung verschieben oder verfahren zu können. Besonders bevorzugt ist es hierbei, wenn die Dreheinrichtung und deren Laufräder sowie die stationäre Übergabeeinrichtung solcherart aufeinander abgestimmt sind, dass die Dreheinrichtung mittels der Laufräder zumindest teilweise über die stationäre Übergabeeinrichtung bewegbar ist.

Die erfindungsgemäße Wendestation wird also in zwei oder, in einer bevorzugten Weiterbildung, drei Bereiche untergliedert. Im ersten Bereich befindet sich die Dreheinrichtung zum Wenden der Blechtafeln oder Blechtafelstapel sowie zum exakten Ausrichten derselben in eine definierte Nullposition auf der jeweils untenliegenden Auflage. Der zweite Bereich wird durch die stationäre Übergabeeinrichtung gebildet, die in einer definierten Relativposition zur Dreheinrichtung angeordnet ist und die Blechtafeln oder Blechtafelstapel aus der Dreheinrichtung entnimmt und, da die Bewegung in einer definierten Nullposition der Blechtafel oder des Blechtafelstapels beginnt, mit wohldefinierten Koordinaten an eine Transporteinrichtung neben der Übergabeeinrichtung übergeben kann. Diese Transporteinrichtung, die bereits Teil eines Lagers sein kann, bevorzugt jedoch Teil der erfindungsgemäßen Wendestation ist, bildet den dritten Bereich, von dem aus die Blechtafel oder der Blechtafelstapel automatisiert in z.B. ein Blechlager eingelagert werden kann.

Diese Untergliederung in drei Bereiche erleichtert die Einhaltung der Arbeitssicherheit ohne Beeinträchtigung der Arbeitsgeschwindigkeit, denn nur der erste Bereich, also die Dreheinrichtung, muss für einen Bediener zugänglich sein, um beispielsweise Blechtafeln oder Blechtafelstapel mittels eines Gabelstaplers einzulegen oder Sicherheitsverpackungen zu entfernen. Während eine Bedienperson sich bei der Dreheinrichtung befindet und dort Arbeitsschritte durchführt, können die anderen Bereiche, also die Übergabeeinrichtung sowie gegebenenfalls die Transporteinrichtung unbeeinflusst weiterlaufen.

Die separate Übergaberichtung mit ausfahrbaren Stangen, insbesondere Teleskopstangen zum Entnehmen von Blechtafeln oder Blechtafelstapeln aus der Dreheinrichtung bietet außerdem den großen Vorteil, dass die Dreheinrichtung von solchen Übergabeelementen freigehalten werden kann, die ansonsten gro-βe Winkelkräfte auf die Drehantriebe der Dreheinrichtung ausüben würden.

Mit den vorzugsweise vorhandenen Laufrädern an der Dreheinrichtung ergibt sich darüber hinaus der Vorteil, dass die Dreheinrichtung bedarfsweise von der Übergabeeirichtung weggefahren, insbesondere jedoch zumindest teilweise über diese gefahren werden kann. Im ersteren Fall wird der Zugang zur Dreheinrichtung vereinfacht, während im letzteren Fall die Dreheinrichtung und die Übergabeeinrichtung quasi zusammengeschoben werden können, um bedarfsweise Platz zu schaffen, d.h. die für die erfindungsgemäße Wendestation notwendige Stellfläche muss nicht generell belegt sein, sondern lediglich dann, wenn die Wendestation verwendet wird.

Die vorzugsweise vorhandene Transporteinrichtung einer erfindungsgemäßen Wendestation besteht bevorzugt aus einem schienengebundenen Einlagerwagen mit mindestens einer darauf aufliegenden Palette, wobei der Einlagerwagen mit Hubstempeln oder einem Heberechen zum Anheben und Absenken von Blechtafeln oder Blechtafelstapeln versehen ist. Somit können die ausfahrbaren Stangen der Übergabeeinrichtung die Blechtafel oder den Blechtafelstapel bis über die Palette verfahren, wo die Hubstempel oder der Heberechen des Einlagerwagens die Blechtafel oder den Blechtafelstapel übernehmen und, nach Zurückziehen der ausfahrbaren Stangen, auf die Palette absenken.

Die Aufteilung der Wendestation in drei Bereiche bietet schließlich den Vorteil, dass sich zwei bis drei Blechtafeln oder Blechtafelstapel in einer Art Puffer befinden können, aus dem sie dann automatisch abtransportiert, insbesondere in ein Regallager eingelagert werden. Die Bedienperson muss beim Einlagern von neu angelieferten Blechtafeln oder Blechtafelstapel dann nicht jeweils darauf warten, bis das Einlagern in ein Regal abgeschlossen ist, bevor die nächste Blechtafel oder der nächste Blechtafelstapel in die Dreheinrichtung eingelegt werden kann.

Mit der erfindungsgemäßen Wendestation können somit Blechtafeln einzeln oder im Stapel, vorzugsweise exakt aus einer initialen Nullposition in der Dreheinrichtung in ein Lager eingelagert werden. Darüber hinaus können Blechtafeln oder Blechtafelstapel wahlweise auch aus einem Lager geholt und in der erfindungsgemäßen Wendestation automatisch gewendet werden, beispielsweise um eine Inspektion im Rahmen einer Qualitätssicherung eines Käufers von Blechtafeln zu ermöglichen, oder eine zum Kommissionieren notwendige Orientierung von Blechtafeln zu schaffen, was bei Blechtafeln mit unterschiedlichen Oberflächen wie Riffelblechen oder Tränenblechen notwendig sein kann. Schließlich kann mittels der erfindungsgemäßen Wendestation, die mit einer Übergabeeinrichtung und einer Transporteinrichtung versehen ist, auch ein Neuausrichten von Blechtafelstapeln und/oder ein Neueinlagern mit wohldefinierten Koordinaten automatisch durchgeführt werden.

Das Entnehmen des Blechtafelstapels aus der Dreheinrichtung durch eine Übergabeeinrichtung erfolgt bei einer entsprechend ausgestalteten Wendestation vorzugsweise solcherart, dass die horizontal ausfahrbaren Stangen, insbesondere Teleskopstangen, auf der ersten Breitseite der Übergabeeinrichtung ausgefahren werden, bis sie die momentan untere Auflage in der Dreheinrichtung untergreifen, wonach die untere Auflage abgesenkt wird, bis die Blechtafel oder der Blechtafelstapel auf den ausfahrbaren Stangen aufliegt. Danach werden die ausfahrbaren Stangen wieder eingefahren, um die Blechtafel oder den Blechtafelstapel aus der Dreheinrichtung zu entnehmen. So kann die Übergabeeinrichtung mit lediglich horizontal beweglichen Stangen ausgestaltet werden, was es bedeutend vereinfacht, mit den Gewichtskräften umzugehen, die auf die ausfahrbaren Stangen einwirken.

Ein Ausführungsbeispiel für eine erfindungsgemäß ausgestaltete Wendestation wird im Folgenden anhand der beigefügten Zeichnungen beschrieben und zusammen mit deren Verwendung, die Beispiele der erfindungsgemäßen Verfahren darstellen, näher erläutert. Es zeigen:
- Figur 1: eine schematische Seitenansicht einer erfindungsgemäß ausgestalteten Wendestation;
- Figur 2: eine perspektivische Ansicht der Wendestation aus Figur 1;
- Figur 3: eine perspektivische Ansicht der Dreheinrichtung der Wendestation aus Figur 1;
- Figur 4: eine perspektivische Ansicht von Teilen der Dreheinrichtung aus Figur 3;
- Figur 5: eine Ansicht wie Figur 4, in einem anderen Verfahrensstadium;
- Figur 6: eine Ansicht wie Figur 4, in einem anderen Verfahrensstadium;
- Figur 7: eine perspektivische Ansicht der Dreheinrichtung aus Figur 3, in einem anderen Verfahrensstadium;
- Figur 8: eine schematische Darstellung eines Teils der Dreheinrichtung aus Figur 7;
- Figur 9: eine Ansicht der stationären Übergabeeinrichtung der Wendestation aus Figur 1;
- Figur 10: eine weitere perspektivische Ansicht der Wendestation aus Figur 1.

Die Zeichnungen sind schematische, nicht maßstabsgerechte Darstellungen. Gleiche Bezugszeichen in den Figuren bezeichnen gleiche oder gleichwirkende Elemente.

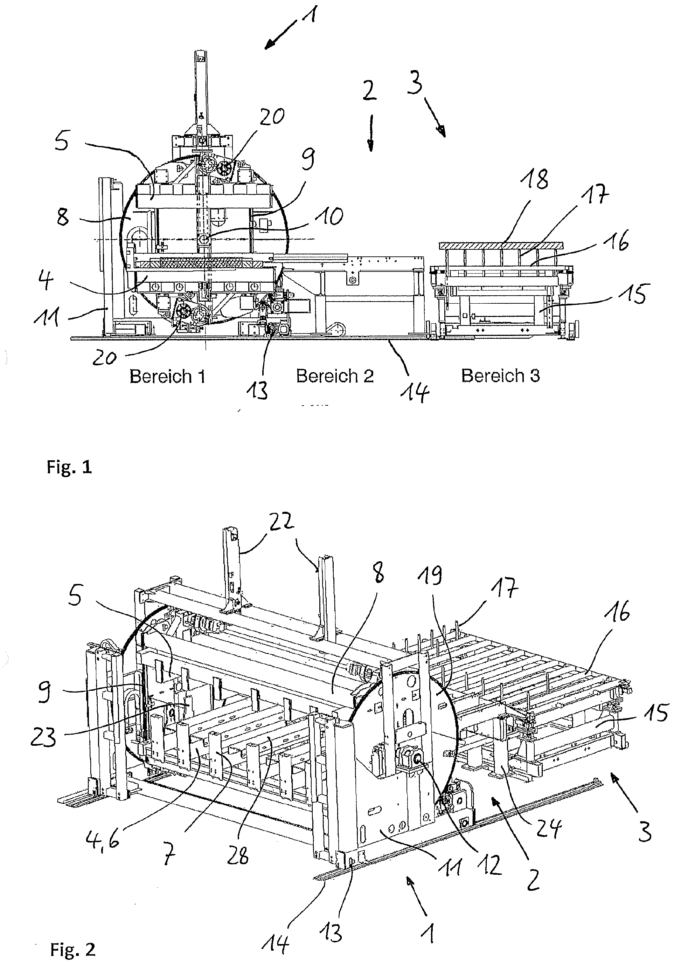

Figur 1 zeigt in einer seitlichen Ansicht ein Ausführungsbeispiel für eine erfindungsgemäß ausgestaltete Wendestation, die sich in drei Bereiche untergliedert: Ein erster Bereich ist eine Dreheinrichtung 1, in der Blechtafeln oder Blechtafelstapel gedreht bzw. gewendet werden können. Ein zweiter Bereich besteht aus einer stationären Übergabeeinrichtung 2 zum Entnehmen einer Blechtafel oder eines Blechtafelstapels aus der Dreheinrichtung 1. In einem dritten Bereich ist eine Transporteinrichtung 3 angeordnet, mit einem schienengebundenen Einlagerwagen 15 und einer darauf aufliegenden Palette 16. Der Einlagerwagen 15 verfügt über eine Anzahl von Hubstempeln 17, die in Figur 1 ausgefahren sind, um einen Blechtafelstapel 18 aus einer angehobenen Stellung auf die Palette 16 abzusenken.

Die einzelnen Elemente der Dreheinrichtung 1 sind vorzugsweise in einer Zusammenschau der Figuren 1 und 2 erkennbar. Die Dreheinrichtung 1 weist eine erste Auflage 4 und eine zweite Auflage 5 für Blechtafelstapel 18 bzw. Blechtafeln auf, wobei in der dargestellten Nullstellung der Dreheinrichtung 1 die erste Auflage 4 die untere Auflage und die zweite Auflage 5 die obere Auflage bilden. Beide Auflagen 4, 5 bestehen aus einer Anzahl von Stegen 6, die stirnseitig mit Anschlägen 7 versehen sind. Diese Ausbildung der insbesondere ersten Auflage 4 ermöglicht es, Blechtafelstapel 18 mittels eines Gabelstaplers in die Dreheinrichtung 1 einzulegen, indem der Blechtafelstapel 18 in die Dreheinrichtung 1 eingebracht wird, bis er sich über der ersten Auflage 4 befindet, und dann die Gabeln des Gabelstaplers abgesenkt werden, bis sie sich in etwa zwischen den Stegen 6 befinden. Der Gabelstapler zieht die Gabeln dann heraus, wodurch der Blechtafelstapel 18, der durch die Anschläge 7 an den Stegen 6 zurückgehalten wird, abgestreift wird. Die in die Dreheinrichtung 1 eingebrachten Blechtafeln liegen dann an den Anschlägen 7 an.

Die erste Auflage 4 und die zweite Auflage 5 sind in einem drehbaren Korb 8 gelagert, und zwar in Linearführungen 9, entlang deren sie mit parallel zueinander orientierten Auflageebenen linear verfahrbar sind. In der dargestellten Nullstellung entspricht dies Auf- und Abbewegungen der beiden Auflagen 4, 5.

Der Korb 8 ist um eine Drehachse 10 drehbar, wozu er in einem Gestell 11, genauer: in an diesem Gestell 11 angebrachten Drehlagern 12 gelagert ist. Der Korb 8 dieses Ausführungsbeispiels weist zwei stirnseitige Scheiben 19 auf, die es ermöglichen, weitere notwendige Aggregate unterzubringen, wie beispielsweise Antriebsmotoren 20 für die Linearbewegungen der Auflagen 4, 5.

Die erste Auflage 4 mit ihrer Auflageebene und die zweite Auflage 5 mit ihrer Auflageebene sind zueinander und zur Drehachse 10 parallel orientiert, und die Drehachse 10 befindet sich zwischen den beiden Auflagen 4, 5 bzw. Auflageebenen. Die Auflagen 4, 5 werden mittels der Antriebsmotoren 20 in ihren Linearführungen 9 symmetrisch zur Drehachse 10 verstellt, so dass diese immer zwischen den beiden Auflageebenen liegt.

Das Gestell 11 der Dreheinrichtung 1 steht mit Laufrädern 13 auf Schienen 14, so dass die Dreheinrichtung 1 von der Übergabeeinrichtung 2 weg bewegt werden kann, beispielsweise um einen leichteren Zugang für Bedienpersonen zu ermöglichen, die einen auf der unteren Auflage 4, 5 befindlichen Blechtafelstapel 18 von seiner Sicherheitsverpackung befreien. Insbesondere kann die Dreheinrichtung 1 auf den Schienen 14 jedoch auch über die Übergabeeinrichtung 2 gefahren werden, um die benötigte Stellfläche der Wendestation bei Nichtbenutzung zu minimieren.

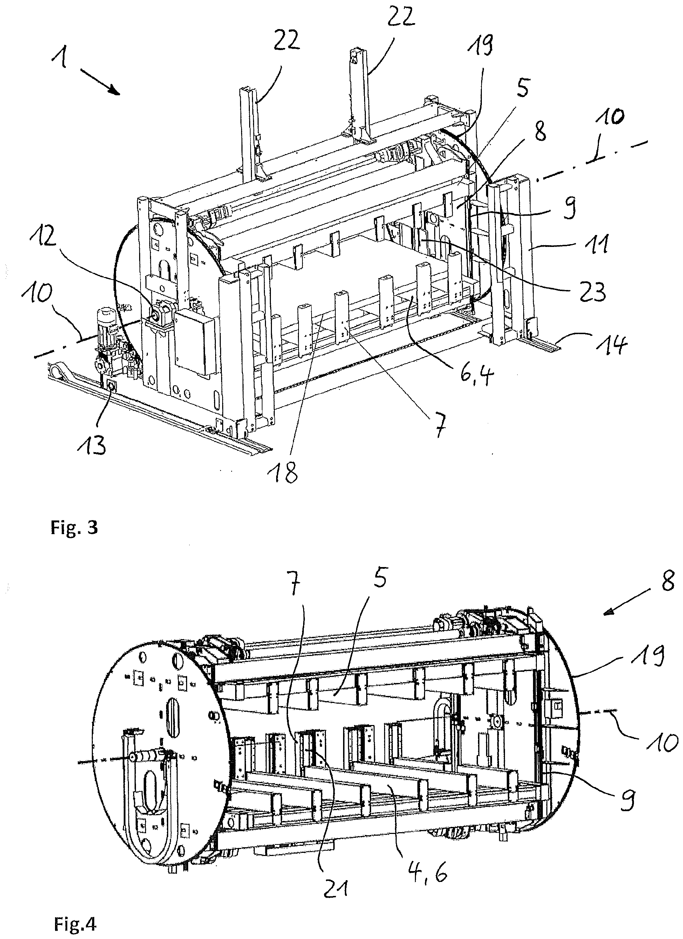

Figur 3 ist eine weitere Ansicht der Dreheinrichtung 1, wobei ein Blechtafelstapel 18 auf den Stegen 6 aufliegt, die die erste Auflage 4 bilden. Die Auflagen 4, 5 sind geöffnet; es handelt sich um die Nullstellung der Dreheinrichtung 1.

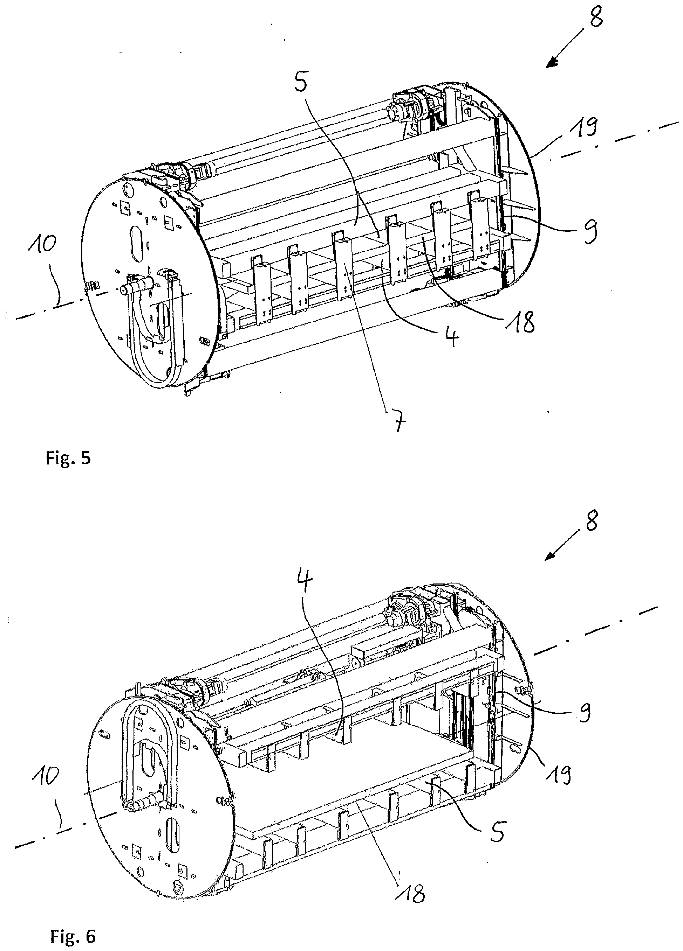

Die Figuren 4, 5 und 6 zeigen jeweils nur einen Teil der Dreheinrichtung 1, und zwar den Korb 8 mit seinen stirnseitigen Scheiben 19, den Linearführungen 9 und den beiden darin verfahrbaren Auflagen 4, 5. Während Figur 4 zum besseren Verständnis der Konstruktion der Dreheinrichtung 1 beitragen soll, wobei die dargestellten Elemente, mit Ausnahme jeweils einer Laufrolle 21 in den Anschlägen 7 der ersten Auflage 4, anhand der Figuren 1 bis 3 bereits beschrieben worden sind, stellen die Figuren 5 und 6 zusammen mit Figur 3 drei verschiedene Zeitpunkte bei der Verwendung der Dreheinrichtung 1 dar:

In Figur 3 befindet sich die Dreheinrichtung 1 in der Nullstellung, d.h. die erste Auflage 4 befindet sich unten und deren Auflageebene verläuft horizontal, während die zweite Auflage 5 nach oben gefahren ist. Ein Blechtafelstapel 18 ist auf die erste Auflage 4 aufgelegt und liegt mit einer Längskante an den Anschlägen 7 der ersten Auflage 4, genauer: an deren Laufrollen 21 an. Der Blechtafelstapel 18 ist nun gegebenenfalls für eine Bedienperson zugänglich, um beispielsweise eine Sicherheitsverpackung zu öffnen und größtenteils zu entfernen.

Die beiden Auflagen 4, 5 werden nun symmetrisch zur Drehachse 10 zusammengefahren, so dass sich eine Situation ergibt, die in Figur 5 dargestellt ist: Der Blechtafelstapel 18 ist zwischen der ersten Auflage 4 und der zweiten Auflage 5 eingespannt. Gleichzeitig verläuft die Drehachse 10 durch den Blechtafelstapel 18, so dass dessen Schwerpunkt vorteilhaft nahe an der Drehachse 10 liegt und infolgedessen nur vergleichsweise geringe Kräfte notwendig sind, um den Korb 8 um 180° zu drehen.

Die sich nach dieser Drehung ergebende Situation zeigt Figur 6. Dort sind die erste Auflage 4, die sich nun oben befindet, und die zweite Auflage 5, die sich nun unten befindet, wieder auseinandergefahren worden, so dass der Blechtafelstapel 18, nun auf der zweiten Auflage 5 aufliegend, wiederum für eine Bedienperson zugänglich ist. Er ist um 180° gewendet worden, so dass beispielsweise die Bedienperson die bislang auf der Unterseite des Blechtafelstapels 18 befindlichen Teile einer Sicherheitsverpackung nun entfernen kann.

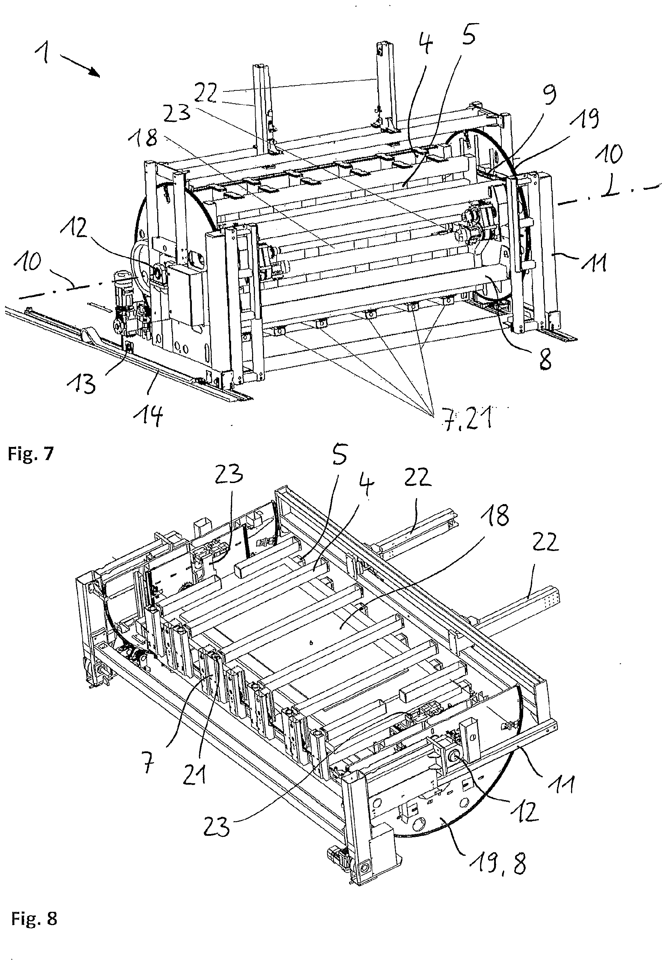

Figur 7 zeigt die Dreheinrichtung 1 in einem optionalen Zwischenstadium, das zwischen den Zeitpunkten, die in den Figuren 5 und 6 dargestellt sind, eingeschoben werden kann. Hier ist der drehbare Korb 8 der Dreheinrichtung 1 zunächst nur um 90 Winkelgrade um die Drehachse 10 gedreht worden, so dass sich nun die Anschläge 7 mit ihren Laufrollen 21 unten befinden. Der Blechtafelstapel 18 befindet sich zwischen der ersten Auflage 4 und der zweiten Auflage 5, ist zwischen diesen jedoch nicht mehr fest eingespannt, da sich die Auflagen 4, 5 geringfügig geöffnet haben. Vielmehr liegt der Blechtafelstapel 18 nun mit den Längskanten der einzelnen Blechtafeln auf den Laufrollen 21 auf. In diesem Zwischenstadium werden die einzelnen Blechtafeln des Blechtafelstapels 18 ausgerichtet, was Figur 8 in einer Schnittdarstellung besser verdeutlicht. Zum einen werden die Blechtafeln mit zwei am Gestell 11 gelagerten, ersten Schiebeeinheiten 22 gegen die Stege 6 bzw. deren Laufrollen 21 geschoben, und zum anderen sind seitliche, zweite Schiebeeinheiten 23 vorgesehen, welche die stirnseitigen Längskanten der einzelnen Blechtafeln des Blechtafelstapels 18 zusammenschieben. Somit sind die Blechtafeln des Blechtafelstapels 18 exakt zueinander ausgerichtet und gegebenenfalls auch in eine Nullposition verbracht, deren Koordinaten bekannt sind und beim weiteren Transport, insbesondere Einlagern des Blechtafelstapels 18 verwendet werden können. Durch Zusammenfahren der beiden Auflagen 4, 5 wird der Blechtafelstapel 18 danach wieder eingespannt und um weitere 90° gedreht, um die in Figur 6 dargestellte Situation zu bilden. In dieser Situation kann insbesondere der gewendete Blechtafelstapel 18 aus der Dreheinrichtung 1 maschinell entnommen werden.

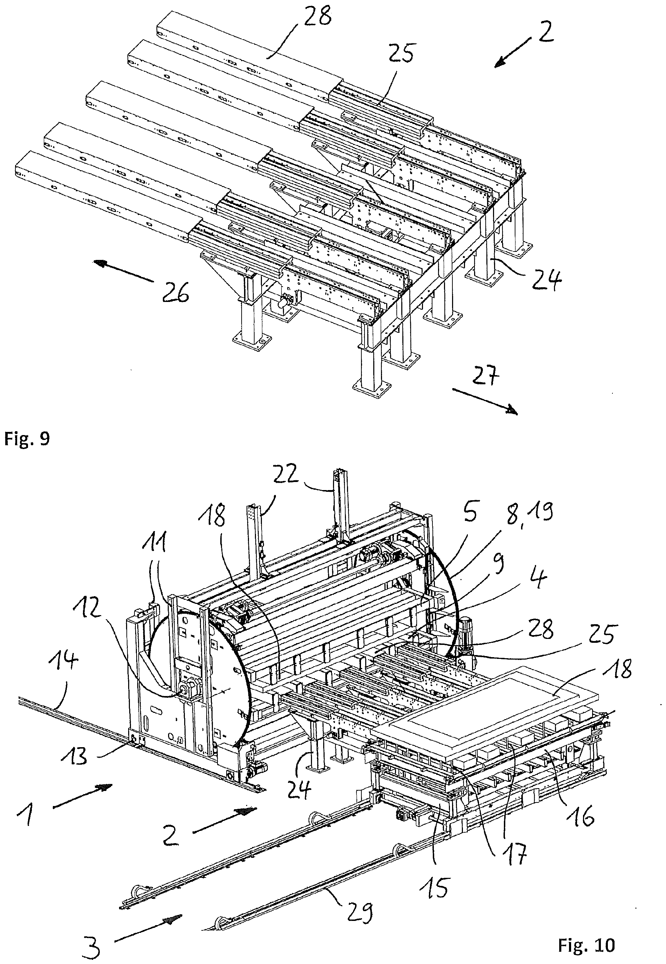

Das Entnehmen des gewendeten Blechtafelstapels 18 aus der Dreheinrichtung 1 erfolgt mittels der Übergabeeinrichtung 2, die in Figur 9 dargestellt ist. Diese besteht aus einem stationären Übergabegestell 24, an dem eine Anzahl von Teleskopstangen 25 befestigt ist, welche auf eine erste Breitseite 26, die zur Dreheinrichtung 1 hin orientiert ist, und zusätzlich auf eine zweite Breitseite 27, die zur Transporteinrichtung 3 hin orientiert ist, ausgefahren werden können. Mittels Auflagehülsen 28, die an den Teleskopstangen 25 angebracht sind, kann der Blechtafelstapel 18 untergriffen und zum Entnehmen aus der Dreheinrichtung abgehoben sowie zum Auflegen auf die Hubstempel 17 der Transporteinrichtung 3 (Figur 1) abgesenkt werden. Das Abheben und Absenken erfolgt allerdings nur relativ gesehen zur Dreheinrichtung 1 und zu den Hubstempeln 17 der Transporteinrichtung 3, denn in realiter sind die Teleskopstangen 25 nur horizontal, jedoch nicht vertikal beweglich, was ihre Tragfähigkeit für das Gewicht der Blechtafelstapel 18 erhöht. Beim Abheben des Blechtafelstapels 18 von der ersten Auflage 4 wird vielmehr die erste Auflage 4 abgesenkt, während die Teleskopstangen 25 vertikal unverändert bleiben. Der Blechtafelstapel 18 legt sich dann auf die Auflagehülsen 28 der Teleskopstangen 25 auf. In entsprechender Weise heben die Hubstempel 17 des Einlagerwagens 15 auf der zweiten Seite 17 der Übergabeeinrichtung 2 einen auf den Auflagehülsen 18 der Teleskopstangen 25 aufliegenden Blechtafelstapel 18 an, so dass die Teleskopstangen 25 wieder zurückgezogen werden können, während der Blechtafelstapel 18 auf den Hubstempeln 17 verbleibt und mit diesen auf die Palette 16 auf dem Einlagerwagen 15 abgesenkt werden kann.

Figur 10 ist eine weitere Gesamtdarstellung der Wendestation mit Dreheinrichtung 1, Übergabeeinrichtung 2 und Transporteinrichtung 3, wobei in dieser Darstellung ein Blechtafelstapel 18 auf der Transporteinrichtung 3 gepuffert liegt und darauf wartet, entlang eines Schienenwegs 29 in ein Blechlager (nicht dargestellt) eingelagert zu werden. Gleichzeitig sind die Teleskopstangen 25 der Übergabeeinrichtung 2 schon wieder auf deren ersten Breitseite 26 in die Dreheinrichtung 1 hinein ausgefahren, um von dort einen nächsten Blechtafelstapel 18 zu entnehmen.

### Bezugszeichenliste:

- 1: Dreheinrichtung
- 2: Übergabeeinrichtung
- 3: Transporteinrichtung
- 4: erste Auflage
- 5: zweite Auflage
- 6: Stege
- 7: Anschläge
- 8: Korb
- 9: Linearführungen
- 10: Drehachse
- 11: Gestell
- 12: Drehlager
- 13: Laufräder
- 14: Schienen
- 15: Einlagerwagen
- 16: Palette
- 17: Hubstempel
- 18: Blechtafelstapel
- 19: stirnseitige Scheiben
- 20: Antriebsmotoren
- 21: Laufrolle
- 22: Schiebeeinheiten (erste)
- 23: Schiebeeinheiten (zweite)
- 24: Übergabegestell
- 25: Teleskopstangen
- 26: erste Breitseite (von 2)
- 27: zweite Breitseite (von 2)
- 28: Auflagehülsen
- 29: Schienenweg
- 30: erste Seite (von 18)
- 31: zweite Seite (von 18).

## Patentansprüche

1. Wendestation für Blechtafeln oder Blechtafelstapel (18), mit einer ersten Auflage (4), die eine erste Auflageebene für eine erste Seite der Blechtafeln bildet, und mit einer zweiten Auflage (5), die eine zweite Auflageebene für eine zweite Seite der Blechtafeln bildet, wobei die beiden Auflagen (4, 5) jeweils um eine horizontale Drehachse (10) drehbar sind und mit mehreren, über die Auflageebenen der Auflagen (4, 5) überstehenden Anschlägen (7) für Längskanten der Blechtafeln versehen sind,
wobei die beiden Auflagen (4, 5) Teil einer Dreheinrichtung (1) sind, die außerdem ein Gestell (11) mit zwei stirnseitigen, in einer gemeinsamen Drehachse (10) liegenden Drehlagern (12) sowie einen in den beiden Drehlagern (12) gelagerten, motorisch um die Drehachse (10) drehbaren Korb (8) mit stirnseitigen Linearführungen (9) für die beiden Auflagen (4, 5) umfasst, wobei die beiden Auflagen (4, 5) solcherart mit parallel verlaufenden, zueinander hin orientierten Auflageebenen im Korb (8) gehalten sind, dass sich die Drehachse (10) zwischen den beiden Auflageebenen befindet,
**dadurch gekennzeichnet, dass**
die beiden Auflagen (4, 5) in den stirnseitigen Linearführungen (9) jeweils in einer Bewegungsrichtung zur Drehachse (10) hin und von dieser weg motorisch bewegbar sind, insbesondere symmetrisch zur Ebene der Drehachse (10) bewegbar sind, und wobei die Auflagen (4, 5) insbesondere jeweils durch mehrere, quer zur Drehachse (10) verlaufende Stege (6) gebildet sind,
wobei die Wendestation zusätzlich zur Dreheinrichtung (1) eine stationäre Übergabeeinrichtung (2) mit mehreren horizontal orientierten und beidseits gemeinsam horizontal ausfahrbaren Stangen, insbesondere Teleskopstangen (25), zum Ablegen der Blechtafeln oder des Blechtafelstapels aufweist, wobei die Stangen auf einer ersten Breitseite (26) der Übergabeeinrichtung (2) ausfahrbar sind, um eine Auflage (4) in der Dreheinrichtung (1) zu unterfassen, und auf einer zweiten Breitseite (27) der Übergabeeinrichtung (2) ausfahrbar sind, um Blechtafeln oder den Blechtafelstapel an eine Transporteinrichtung (3) zu übergeben.

2. Wendestation nach Anspruch 1,
**dadurch gekennzeichnet,**
**dass** zumindest ein Teil der Anschläge (7) für Längskanten der Blechtafeln mit Laufrollen (21) für die Längskanten versehen ist.

3. Wendestation nach mindestens einem der Ansprüche 1 oder 2,
**dadurch gekennzeichnet,**
**dass** am drehbaren Korb (8) mindestens eine Schiebeeinheit (22, 23) zum Aufsetzen auf Längskanten der Blechtafeln und zum Schieben von Blechtafeln innerhalb einer zu den Auflageebenen parallelen Schiebeebene angebracht ist.

4. Wendestation nach mindestens einem der Ansprüche 1 bis 3,
**dadurch gekennzeichnet,**
**dass** das Gestell (11) mit Laufrädern (13), insbesondere mit Laufrädern (13) für Schienen (14) versehen ist, um die Dreheinrichtung (1) zu verschieben oder zu verfahren, und dass die Dreheinrichtung (1) mittels der Laufräder (13) zumindest teilweise über die stationäre Übergabeeinrichtung (2) bewegbar ist.

5. Wendestation nach Anspruch 4,
**dadurch gekennzeichnet,**
**dass** die Wendestation zusätzlich zur Dreheinrichtung (1) und der Übergabeeinrichtung (2) eine Transporteinrichtung (3) aufweist, wobei die Übergabeeinrichtung (2) zwischen der Dreheinrichtung (1) und der Transporteinrichtung (3) angeordnet ist, und wobei die Transporteinrichtung (3) mindestens eine Palette (16) zum Ablegen und Einlagern von Blechtafeln oder Blechtafelstapeln (18) umfasst.

6. Wendestation nach Anspruch 5,
**dadurch gekennzeichnet,**
**dass** die Transporteinrichtung (3) im Wesentlichen aus einem schienengebundenen Einlagerwagen (15) mit mindestens einer darauf aufliegenden Palette (16) besteht, wobei der Einlagerwagen (15) mit Hubstempeln (17) oder einem Heberechen zum Anheben und Absenken von Blechtafeln oder Blechtafelstapeln (18) versehen ist.

7. Verfahren zum Auspacken von Blechtafelstapeln (18), unter Verwendung einer Wendestation nach mindestens einem der Ansprüche 1 bis 6, mit folgenden Verfahrensschritten:
- Sicherstellen, dass sich die Dreheinrichtung (1) der Wendestation in einer Nullstellung befindet, in der die beiden Auflagen (4, 5) voneinander beabstandet sind und die Auflageebenen horizontal verlaufen,
- Einbringen eines Blechtafelstapels (18) in die Dreheinrichtung (1) und Ablegen desselben auf der momentan unten angeordneten Auflage (4),
- Öffnen einer Verpackung des Blechtafelstapels (18) vor oder nach dem Einbringen desselben in die Dreheinrichtung (1),
- Zusammenfahren der beiden Auflagen (4, 5) und Einspannen des Blechtafelstapels (18) zwischen den Auflagen (4, 5),
- Drehen des drehbaren Korbs (8) der Dreheinrichtung (1) um 180 Winkelgrade und Auseinanderfahren der beiden Auflagen (4, 5),
- Entfernen der Verpackung des Blechtafelstapels (18),
- Entnehmen des Blechtafelstapels (18) aus der Dreheinrichtung (1), oder Zusammenfahren der beiden Auflagen (4, 5) und Einspannen des Blechtafelstapels (18) zwischen den Auflagen (4, 5) sowie Zurückdrehen des drehbaren Korbs (8) der Dreheinrichtung (1) um 180 Winkelgrade und Entnehmen des Blechtafelstapels (18) aus der Dreheinrichtung (1).

8. Verfahren zum Einlagern von Blechtafelstapeln (18), unter Verwendung einer Wendestation nach mindestens einem der Ansprüche 5 oder 6, mit folgenden Verfahrensschritten:
- Sicherstellen, dass sich die Dreheinrichtung (1) der Wendestation in einer Nullstellung befindet, in der die beiden Auflagen (4, 5) voneinander beabstandet sind und die Auflageebenen horizontal verlaufen,
- Einbringen eines Blechtafelstapels (18) in die Dreheinrichtung (1) und Ablegen desselben auf der momentan unten angeordneten Auflage (4),
- Zusammenfahren der beiden Auflagen (4, 5) und Einspannen des Blechtafelstapels (18) zwischen den Auflagen (4, 5),
- Drehen des drehbaren Korbs (8) der Dreheinrichtung (1) um 180 Winkelgrade und Auseinanderfahren der beiden Auflagen(4, 5),
- Entnehmen des Blechtafelstapels (18) aus der Dreheinrichtung (1) mit der Übergabeeinrichtung (2), oder Zusammenfahren der beiden Auflagen (4, 5) und Einspannen des Blechtafelstapels (18) zwischen den Auflagen (4, 5) sowie Zurückdrehen des drehbaren Korbs (8) der Dreheinrichtung (1) um 180 Winkelgrade und Entnehmen des Blechtafelstapels (18) aus der Dreheinrichtung (1) mit der Übergabeeinrichtung (2),
- Übergeben des Blechtafelstapels (18) von der Übergabeeinrichtung (2) an die Transporteinrichtung (3).

9. Verfahren zum Wenden von Blechtafeln oder Blechtafelstapeln (18), unter Verwendung einer Wendestation nach mindestens einem der Ansprüche 5 oder 6, mit folgenden Verfahrensschritten:
- Sicherstellen, dass sich die Dreheinrichtung (1) der Wendestation in einer Nullstellung befindet, in der die beiden Auflagen (4, 5) voneinander beabstandet sind und die Auflageebenen horizontal verlaufen,
- Abnehmen einer Blechtafel oder eines Blechtafelstapels (18) mittels der Übergabeeinrichtung (2) von der Transporteinrichtung (3),
- Einbringen der Blechtafel oder des Blechtafelstapels (18) in die Dreheinrichtung (1) mittels der Übergabeeinrichtung (2) und Ablegen desselben auf der momentan unten angeordneten Auflage (4),
- Zusammenfahren der beiden Auflagen (4, 5) und Einspannen der Blechtafel oder des Blechtafelstapels (18) zwischen den Auflagen (4, 5),
- Drehen des drehbaren Korbs (8) der Dreheinrichtung (1) um 180 Winkelgrade und Auseinanderfahren der beiden Auflagen (4, 5),
- Entnehmen des Blechtafelstapels (18) aus der Dreheinrichtung (1) mittels der Übergabeeinrichtung (2),
- Übergeben des Blechtafelstapels (18) von der Übergabeeinrichtung (2) an die Transporteinrichtung (3).

10. Verfahren nach einem der Ansprüche 7 bis 9, wobei das Einbringen des Blechtafelstapels (18) in die Dreheinrichtung (1) und das Ablegen desselben auf der momentan unten angeordneten Auflage (4) solcherart erfolgt, dass der Blechtafelstapel (18) an zumindest einer Längskante der Blechtafeln an den über die Auflageebene der Auflage (4) überstehenden Anschlägen (7) anliegt, und wobei die Dreheinrichtung (1) solcherart gedreht wird, dass die an den Anschlägen (7) anliegende Längskanten der Blechtafeln nach unten orientiert sind.

11. Verfahren nach Anspruch 10, wobei die Dreheinrichtung (1), nach dem Einbringen und Ablegen der Blechtafel oder des Blechtafelstapels (18) und Zusammenfahren der beiden Auflagen (4, 5) und Einspannen des Blechtafelstapels (18) zwischen den Auflagen (4, 5), um 90 Winkelgrade gedreht wird, wonach die beiden Auflagen (4, 5) geringfügig auseinandergefahren werden und die Blechtafel oder alle Blechtafeln des Blechtafelstapels (18) mittels einer Schiebeeinheit (22) gegen die Anschläge (7) für eine Längskante der Blechtafeln geschoben wird oder werden.

12. Verfahren nach Anspruch 11, wobei eine Wendestation nach den Ansprüchen 2 und 3 verwendet wird und wobei die Blechtafel oder alle Blechtafeln des Blechtafelstapels (18) mittels mindestens einer stirnseitig angreifenden Schiebeeinheit (23) in eine Nullposition geschoben wird oder werden.

13. Verfahren nach einem der Ansprüche 7 bis 12, wobei das Entnehmen des Blechtafelstapels (18) aus der Dreheinrichtung (1) durch die Übergabeeinrichtung (2) solcherart erfolgt, dass die horizontal ausfahrbaren Stangen auf der ersten Breitseite (26) der Übergabeeinrichtung (2) ausgefahren werden, bis sie die momentan untere Auflage (4) untergreifen, dass die untere Auflage (4) sodann abgesenkt wird, bis die Blechtafel oder der Blechtafelstapel (18) auf den ausfahrbaren Stangen aufliegt, und danach die ausfahrbaren Stangen wieder eingefahren werden, um die Blechtafel oder den Blechtafelstapel (18) aus der Dreheinrichtung (1) zu entnehmen.

14. Verfahren nach einem der Ansprüche 8 bis 13, wobei das Übergeben des Blechtafelstapels (18) von der Übergabeeinrichtung (2) an die Transporteinrichtung (3) unter Verwendung einer Wendestation nach Anspruch 10 und solcherart erfolgt, dass die horizontal ausfahrbaren Stangen mit der Blechtafel oder dem Blechtafelstapel (18) auf der zweiten Breitseite (27) der Übergabeeinrichtung (2) ausgefahren werden, bis sich die Blechtafel oder der Blechtafelstapel (18) über der Palette (16) befinden, dann die Blechtafel oder der Blechtafelstapel (18) mittels der Hubstempel (17) oder des Heberechens des Einlagerwagens (15) angehoben wird, danach die ausfahrbaren Stangen wieder eingefahren werden, und schließlich die Hubstempel (17) oder der Heberechen abgesenkt werden, bis die Blechtafel oder der Blechtafelstapel (18) auf der Palette (16) aufliegt.

## Claims

1. Turning station for metal sheets or metal sheet stacks (18), with a first support (4), which forms a first support plane for a first side of the metal sheets, and with a second support (5), which forms a second support plane for a second side of the metal sheets, wherein both supports (4, 5) are each rotatable about an horizontal axis of rotation (10) and are provided with a plurality of stops (7) for the longitudinal edges of the metal sheets, which project beyond the support planes of the supports (4, 5), wherein both supports (4, 5) are part of a rotary apparatus (1), which also comprises a frame (11) with two front-side rotary bearings (12), situated in a common axis of rotation (10), and a basket (8), mounted in both rotary bearings (12) and rotatable via a motor about the axis of rotation (10) with front-side linear guides (9) for both supports (4, 5), wherein both supports (4, 5) are held by parallel, mutually oriented support planes in the basket (8), such that the axis of rotation (10) is located between both support planes,
**characterised in that** both supports (4, 5) are each movable by a motor in the front-side linear guides (9) in a direction of movement towards and away from the axis of rotation (10), in particular movable symmetrically to the plane of the axis of rotation (10), and wherein the supports (4, 5) are each formed in particular by a plurality of webs (6) running transversely to the axis of rotation (10),
wherein the turning station, in addition to the rotary apparatus (1), has a stationary transfer apparatus (2) with a plurality of horizontally oriented rods that can be extended horizontally on both sides, in particular telescopic rods (25), for placing the metal sheets or the metal sheet stack, wherein the rods on a first broad side (26) of the transfer apparatus (2) can be extended in order to engage below a support (4) in the rotary apparatus (1), and can be extended on a second broad side (27) of the transfer apparatus (2) in order to transfer metal sheets or the metal sheet stack to a transport apparatus (3).

2. Turning station according to claim 1,
**characterised in**
**that** at least some of the stops (7) for the longitudinal edges of the metal sheets are provided with rollers (21) for the longitudinal edges.

3. Turning station according to at least one of claims 1 or 2,
**characterised in**
**that** at least one sliding unit (22, 23) is attached to the rotatable basket (8) for positioning on longitudinal edges of the metal sheets and for pushing metal sheets within a sliding plane parallel to the support planes.

4. Turning station according to at least one of claims 1 to 3,
**characterised in**
**that** the frame (11) is provided with running wheels (13), in particular with running wheels (13) for rails (14), in order to displace or move the rotary apparatus (1), and that the rotary apparatus (1) is at least partially movable via the stationary transfer apparatus (2) by means of the running wheels (13).

5. Turning station according to claim 4,
**characterised in**
**that** the turning station has a transport apparatus (3) in addition to the rotary apparatus (1) and the transfer apparatus (2), wherein the transfer apparatus (2) is arranged between the rotary apparatus (1) and the transport apparatus (3), and wherein the transport apparatus (3) comprises at least one pallet (16) for placing and storing metal sheets or metal sheet stacks (18).

6. Turning station according to claim 5,
**characterised in**
**that** the transport apparatus (3) essentially consists of a rail-bound storage truck (15) with at least one pallet (16) resting on it, wherein the storage truck (15) is provided with lifting rams (17) or a lifting rake for raising and lowering metal sheets or metal sheet stacks (18).

7. Method for unpacking metal sheet stacks (18), using a turning station according to at least one of claims 1 to 6, with the following method steps:
- ensuring that the rotary apparatus (1) of the turning station is situated in a neutral position in which both supports (4, 5) are mutually spaced apart and the support planes are situated horizontally,
- introducing a metal sheet stack (18) into the rotary apparatus (1) and placing the same on the support (4) currently located below,
- opening a packaging of the metal sheet stack (18) before or after introducing the same into the rotary apparatus (1),
- converging both supports (4, 5) and clamping the metal sheet stack (18) between the supports (4, 5),
- rotating the rotatable basket (8) of the rotary apparatus (1) by 180 angular degrees and diverging both supports (4, 5),
- removing the packaging of the metal sheet stack (18),
- retrieving the metal sheet stack (18) from the rotary apparatus (1), or converging both supports (4, 5) and clamping the metal sheet stack (18) between the supports (4, 5) and reversing the rotatable basket (8) of the rotary apparatus (1) by 180 angular degrees and retrieving the metal sheet stack (18) from the rotary apparatus (1).

8. Method for storing metal sheet stacks (18), using a turning station according to at least one of claims 5 or 6, with the following method steps:
- ensuring that the rotary apparatus (1) of the turning station is situated in a neutral position in which both supports (4, 5) are mutually spaced apart and the support planes are situated horizontally,
- introducing a metal sheet stack (18) into the rotary apparatus (1) and placing the same on the support (4) currently located below,
- converging both supports (4, 5) and clamping the metal sheet stack (18) between the supports (4, 5),
- rotating the rotatable basket (8) of the rotary apparatus (1) by 180 angular degrees and diverging both supports (4, 5),
- retrieving the metal sheet stack (18) from the rotary apparatus (1) with the transfer apparatus (2), or converging both supports (4, 5) and clamping the metal sheet stack (18) between the supports (4, 5) and reversing the rotatable basket (8) of the rotary apparatus (1) by 180 angular degrees and retrieving the metal sheet stack (18) from the rotary apparatus (1) with the transfer apparatus (2),
- transferring the metal sheet stack (18) from the transfer apparatus (2) to the transport apparatus (3).

9. Method for turning metal sheets or metal sheet stacks (18), using a turning station according to at least one of claims 5 or 6, with the following method steps:
- ensuring that the rotary apparatus (1) of the turning station is situated in a neutral position in which both supports (4, 5) are mutually spaced apart and the support planes are situated horizontally,
- removing a metal sheet or a metal sheet stack (18) from the transport apparatus (3) by means of the transfer apparatus (2),
- introducing the metal sheet or the metal sheet stack (18) into the rotary apparatus (1) by means of the transfer apparatus (2) and placing the same on the support (4) currently located below,
- converging both supports (4, 5) and clamping the metal sheet or the metal sheet stack (18) between the supports (4, 5),
- rotating the rotatable basket (8) of the rotary apparatus (1) by 180 angular degrees and diverging both supports (4, 5),
- retrieving the metal sheet stack (18) from the rotary apparatus (1) by means of the transfer apparatus (2),
- transferring the metal sheet stack (18) from the transfer apparatus (2) to the transport apparatus (3).

10. Method according to any one of claims 7 to 9, wherein introducing the metal sheet stack (18) into the rotary apparatus (1) and placing the same on the support (4) currently located below takes place in such a way that the metal sheet stack (18) on at least a longitudinal edge of the metal sheets rests against the stops (7) which project above the support plane of the support (4), and wherein the rotary apparatus (1) is rotated in such a way that the longitudinal edges of the metal sheets resting on the stops (7) are oriented downwards.

11. Method according to claim 10, wherein the rotary apparatus (1), after introducing and placing the metal sheet or the metal sheet stack (18) and converging both supports (4, 5) and clamping the metal sheet stack (18) between the supports (4, 5), is rotated by 90 angular degrees, after which both supports (4, 5) are moved slightly apart and the metal sheet or all metal sheets of the metal sheet stack (18) is or are pushed against the stops (7) for a longitudinal edge of the metal sheets by means of a sliding unit (22).

12. Method according to claim 11, wherein a turning station according to claims 2 and 3 is used and wherein the metal sheet or all metal sheets of the metal sheet stack (18) is or are pushed into a neutral position by means of at least one sliding unit (23) acting on the front side.

13. Method according to any one of claims 7 to 12, wherein the metal sheet stack (18) is retrieved from the rotary apparatus (1) by the transfer apparatus (2) in such a way, that the horizontally extendable rods on the first broad side (26) of the transfer apparatus (2) are extended until they reach under the currently lower support (4), that the lower support (4) is then lowered until the metal sheet or the metal sheet stack (18) rests on the extendable rods, and subsequently, the extendable rods are retracted again, in order to retrieve the metal sheet or the metal sheet stack (18) from the rotary apparatus (1).

14. Method according to any one of claims 8 to 13, wherein the transfer of the metal sheet stack (18) from the transfer apparatus (2) to the transport apparatus (3) takes place using a turning station according to claim 10 and in such a way that the horizontally extendable rods with the metal sheet or the metal sheet stack (18) on the second broad side (27) of the transfer apparatus (2) can be extended until the metal sheet or the metal sheet stack (18) is located above the pallet (16), then the metal sheet or the metal sheet stack (18) is raised by means of the lifting ram (17) or the lifting rake of the storage truck (15), then the extendable rods are retracted, and finally the lifting ram (17) or the lifting rake is lowered until the metal sheet or the metal sheet stack (18) rests on the pallet (16).

## Revendications

1. Station de retournement pour des panneaux en tôle ou des piles de panneaux en tôle (18), avec un premier support (4) qui forme un premier plan de support pour un premier côté des panneaux en tôle, et avec un second support (5) qui forme un second plan de support pour un second côté des panneaux en tôle, dans laquelle les deux supports (4, 5) sont rotatifs respectivement autour d'un axe de rotation (10) horizontal et sont pourvus de plusieurs butées (7) dépassant des plans de support des supports (4, 5) pour des bords longitudinaux des panneaux en tôle, dans laquelle les deux supports (4, 5) font partie d'un appareil de rotation (1) qui comprend en outre un bâti (11) avec deux paliers rotatifs (12) côté avant, se trouvant dans un axe de rotation (10) commun ainsi qu'un panier (8) logé dans les deux paliers rotatifs (12), rotatif de manière motorisée autour de l'axe de rotation (10) avec des guidages linéaires (9) côté avant pour les deux supports (4, 5), dans laquelle les deux supports (4, 5) sont maintenus avec des plans de support s'étendant parallèlement, orientés l'un vers l'autre dans le panier (8) de telle manière que l'axe de rotation (10) se trouve entre les deux plans de support,
**caractérisée en ce que** les deux supports (4, 5) sont mobiles de manière motorisée dans les guidages linéaires (9) côté avant respectivement dans un sens de déplacement vers l'axe de rotation (10) et loin de celui-ci, en particulier sont mobiles de manière symétrique au plan de l'axe de rotation (10), et dans laquelle les supports (4, 5) sont formés en particulier respectivement par plusieurs nervures (6) s'étendant transversalement à l'axe de rotation (10),
dans laquelle la station de retournement présente, outre l'appareil de rotation (1), un appareil de transfert (2) stationnaire avec plusieurs tiges orientées horizontalement et déployables horizontalement ensemble des deux côtés, en particulier des tiges télescopiques (25), pour le dépôt de panneaux en tôle ou de la pile de panneaux en tôle, dans laquelle les tiges sont déployables sur un premier côté large (26) de l'appareil de transfert (2) afin de saisir par le dessous un support (4) dans l'appareil de rotation (1), et sont déployables sur un second côté large (27) de l'appareil de transfert (2) afin de transférer des panneaux en tôle ou la pile de panneaux en tôle à un appareil de transport (3).

2. Station de retournement selon la revendication 1,
**caractérisée en ce que**
au moins une partie des butées (7) pour des bords longitudinaux des panneaux en tôle est pourvue de rouleaux (21) pour les bords longitudinaux.

3. Station de retournement selon au moins l'une quelconque des revendications 1 ou 2,
**caractérisée en ce que**
au moins une unité de coulissement (22, 23) est montée au niveau du panier rotatif (8) pour le placement sur des bords longitudinaux des panneaux en tôle et pour le coulissement de panneaux en tôle dans un plan coulissant parallèle aux plans de support.

4. Station de retournement selon au moins l'une quelconque des revendications 1 à 3,
**caractérisée en ce que**
le bâti (11) est pourvu de roues (13), en particulier de roues (13) pour des rails (14) afin de coulisser ou déplacer l'appareil de rotation (1), et **en ce que** l'appareil de rotation (1) est mobile au moyen des roues (13) au moins partiellement par le biais de l'appareil de transfert (2) stationnaire.

5. Station de retournement selon la revendication 4,
**caractérisée en ce que**
la station de retournement présente, outre l'appareil de rotation (1) et l'appareil de transfert (2), un appareil de transport (3), dans laquelle l'appareil de transfert (2) est agencé entre l'appareil de rotation (1) et l'appareil de transport (3), et dans laquelle l'appareil de transport (3) comprend au moins une palette (16) pour déposer et stocker des panneaux en tôle ou piles de panneaux en tôle (18).

6. Station de retournement selon la revendication 5,
**caractérisée en ce que**
l'appareil de transport (3) se compose sensiblement d'un chariot de stockage (15) roulant sur rails avec au moins une palette (16) se trouvant dessus, dans laquelle le chariot de stockage (15) est pourvu de vérins de levage (17) ou d'un râteau de levage pour le levage et l'abaissement de panneaux en tôle ou piles de panneaux en tôle (18).

7. Procédé de déballage de piles de panneaux en tôle (18) en utilisant une station de retournement selon au moins l'une quelconque des revendications 1 à 6, avec les étapes de procédé suivantes :
- assurer que l'appareil de rotation (1) de la station de retournement se trouve dans une position neutre, dans laquelle les deux supports (4, 5) sont espacés l'un de l'autre et les plans de support s'étendent horizontalement,
- introduire une pile de panneaux en tôle (18) dans l'appareil de rotation (1) et déposer celle-ci sur le support (4) agencé de manière momentanée en bas,
- ouvrir un emballage de la pile de panneaux en tôle (18) avant ou après l'introduction de celle-ci dans l'appareil de rotation (1),
- rapprocher les deux supports (4, 5) et serrer la pile de panneaux en tôle (18) entre les supports (4, 5),
- tourner le panier (8) rotatif de l'appareil de rotation (1) de 180 degrés et écarter les deux supports (4, 5),
- retirer l'emballage de la pile de panneaux en tôle (18),
- retirer la pile de panneaux en tôle (18) de l'appareil de rotation (1), ou rapprocher les deux supports (4, 5) et serrer la pile de panneaux en tôle (18) entre les supports (4, 5) ainsi que tourner à l'envers le panier (8) rotatif de l'appareil de rotation (1) de 180 degrés et retirer la pile de panneaux en tôle (18) de l'appareil de rotation (1).

8. Procédé de stockage de piles de panneaux en tôle (18) en utilisant une station de retournement selon au moins l'une quelconque des revendications 5 ou 6, avec les étapes de procédé suivantes :
- assurer que l'appareil de rotation (1) de la station de retournement se trouve dans une position neutre, dans laquelle les deux supports (4, 5) sont espacés l'un de l'autre et les plans de support s'étendent horizontalement,
- introduire une pile de panneaux en tôle (18) dans l'appareil de rotation (1) et déposer celle-ci sur le support (4) agencé de manière momentanée en bas,
- rapprocher les deux supports (4, 5) et serrer la pile de panneaux en tôle (18) entre les supports (4, 5),
- tourner le panier (8) rotatif de l'appareil de rotation (1) de 180 degrés et écarter les deux supports (4, 5),
- retirer la pile de panneaux en tôle (18) de l'appareil de rotation (1) avec l'appareil de transfert, ou rapprocher les deux supports (4, 5) et serrer la pile de panneaux en tôle (18) entre les supports (4, 5) ainsi que tourner à l'envers le panier (8) rotatif de l'appareil de rotation (1) de 180 degrés et retirer la pile de panneaux en tôle (18) de l'appareil de rotation (1) avec l'appareil de transfert (2),
- transférer la pile de panneaux en tôle (18) de l'appareil de transfert (2) à l'appareil de transport (3).

9. Procédé de retournement de panneaux en tôle ou de piles de panneaux en tôle (18) en utilisant une station de retournement selon au moins l'une quelconque des revendications 5 ou 6, avec les étapes de procédé suivantes :
- assurer que l'appareil de rotation (1) de la station de retournement se trouve dans une position neutre, dans laquelle les deux supports (4, 5) sont espacés l'un de l'autre et les plans de support s'étendent horizontalement,
- retirer un panneau en tôle ou une pile de panneaux en tôle (18) de l'appareil de transport (3) au moyen de l'appareil de transfert (2),
- introduire le panneau en tôle ou la pile de panneaux en tôle (18) dans l'appareil de rotation (1) au moyen de l'appareil de transfert (2) et déposer celle-ci sur le support (4) agencé de manière momentanée en bas,
- rapprocher les deux supports (4, 5) et serrer le panneau en tôle ou la pile de panneaux en tôle (18) entre les supports (4, 5),
- tourner le panier (8) rotatif de l'appareil de rotation (1) de 180 degrés et écarter les deux supports (4, 5),
- retirer la pile de panneaux en tôle (18) de l'appareil de rotation (1) au moyen de l'appareil de transfert (2),
- transférer la pile de panneaux en tôle (18) de l'appareil de transfert (2) à l'appareil de transport (3).

10. Procédé selon l'une quelconque des revendications 7 à 9, dans lequel l'introduction de la pile de panneaux en tôle (18) dans l'appareil de rotation (1) et le dépôt de celle-ci sur le support (4) agencé de manière momentanée en bas sont effectués de telle manière que la pile de panneaux en tôle (18) repose au niveau d'au moins un bord longitudinal des panneaux en tôle contre les butées (7) dépassant du plan de support du support (4), et dans lequel l'appareil de rotation (1) est tourné de telle manière que les bords longitudinaux reposant contre les butées (7) des panneaux en tôle soient orientés vers le bas.

11. Procédé selon la revendication 10, dans lequel l'appareil de rotation (1) est tourné après l'introduction et le dépôt du panneau en tôle ou de la pile de panneaux en tôle (18) et le rapprochement des deux supports (4, 5) et le serrage de la pile de panneaux en tôle (18) entre les supports (4, 5) est tourné de 90 degrés, après quoi les deux supports (4, 5) sont légèrement écartés et le panneau en tôle ou tous les panneaux en tôle de la pile de panneaux en tôle (18) est ou sont coulissés au moyen d'une unité de coulissement (22) contre les butées (7) pour un bord longitudinal des panneaux en tôle.

12. Procédé selon la revendication 11, dans lequel une station de retournement selon les revendications 2 et 3 est utilisée et dans lequel le panneau en tôle ou tous les panneaux en tôle de la pile de panneaux en tôle (18) est ou sont coulissés au moyen d'au moins une unité de coulissement (23) agissant côté avant dans une position neutre.

13. Procédé selon l'une quelconque des revendications 7 à 12, dans lequel le retrait de la pile de panneaux en tôle (18) de l'appareil de rotation (1) est effectué par l'appareil de transfert (2) de telle manière que les tiges déployables horizontalement soient déployées sur le premier côté large (26) de l'appareil de transfert (2) jusqu'à ce qu'elles saisissent par le dessous le support (4) momentanément inférieur, en ce que le support (4) inférieur soit abaissé jusqu'à ce que le panneau en tôle ou la pile de panneaux en tôle (18) repose sur les tiges déployables, et ensuite les tiges déployables sont de nouveau rétractées afin de retirer le panneau en tôle ou la pile de panneaux en tôle (18) de l'appareil de rotation (1).

14. Procédé selon l'une quelconque des revendications 8 à 13, dans lequel le transfert de la pile de panneaux en tôle (18) est effectuée de l'appareil de transfert (2) à l'appareil de transport (3) en utilisant une station de retournement selon la revendication 10 et de telle manière que les tiges déployables horizontalement soient déployées avec le panneau en tôle ou la pile de panneaux en tôle (18) sur le second côté large (27) de l'appareil de transfert (2) jusqu'à ce que le panneau en tôle ou la pile de panneaux en tôle (18) se trouve au-dessus de la palette (16), puis le panneau en tôle ou la pile de panneaux en tôle (18) est levée au moyen des vérins de levage (17) ou du râteau de levage du chariot de stockage (15), ensuite les tiges déployables sont de nouveau rétractées, et enfin les vérins de levage (17) ou râteaux de levage sont abaissés jusqu'à ce que le panneau en tôle ou la pile de panneaux en tôle (18) repose sur la palette (16).
